# NEW EUROPEAN PATENT SPECIFICATION

(11) **EP 0 633 732 B2**
(45) Date of publication and mention of the opposition decision: **12.01.2000**
(45) Mention of the grant of the patent: 08.11.1995
(21) Application number: 93909197.1
(22) Date of filing: 30.03.1993
(51) Int. Cl.: A23L 1/22

(54) **AQUEOUS LIQUID FLAVOR OIL CAPSULES, METHOD OF MAKING AND USING IN FOODS**
WÄSSRIGE KAPSELN VON GESCHMACKSÖL, VERFAHREN ZUR HERSTELLUNG DERSELBEN UND ANWENDUNG DERSELBEN
CAPSULES D'HUILE AROMATIQUE AQUEUSE, LEURS PROCEDES DE FABRICATION ET LEURS APPLICATIONS DANS LES ALIMENTS

(30) Priority: 30.03.1992 US 859934
(43) Date of publication of application: 18.01.1995
(73) Proprietor: Givaudan Roure (International) S.A., 1214 Vernier-Genève (CH)
(72) Inventor: WAMPLER, Daniel J., Cincinnati, OH 45241 (US); SOPER, Jon C., Huber Heights, OH 45424 (US)
(74) Representative: Findlay, Alice Rosemary
(86) International application number: US9302926
(87) International publication number: WO9319621

(56) References cited:
- EP-A- 0 246 902
- EP-A- 0 385 535
- EP-A- 0 455 598
- FR-A- 2 057 892
- FR-A- 2 233 095
- FR-A- 2 570 604
- US-A- 3 567 650
- S.BUDAVARI ET AL. 'The Merck index.Eleventh edition.' 1989 , MERCK & CO , RAHWAY,N.J. page 372
- P.B.DEASY 'Microencapsulation and related drug processes' 1988 , MARCEL DEKKER , NEW YOK AND BASEL pages 64 -69
- Snack Food (1970 Vol. 59, No. 5, p.76)
- Mc Kernan, in "Microencapsulation in the Flavour Industry. Part II" (The Flavour Industry, February 1973, 70-74).

## Description

This invention relates to a method of making, and using in foods, flavour oil capsules.

### Background of the Invention

A considerable amount of effort has been devoted for many years to provide solid particulate flavoring materials in which a flavor oil is contained in the particulate matrix. Various attempts have been made to fix flavor oils in many different types of organic matrices to provide stable free-flowing powders or particles which contain the flavor oils for flavor release when incorporated into many types of foods. Several principle techniques have been proposed for the preparation of solid particulate flavoring materials. These are plating, spray-drying and encapsulation techniques.

In a typical spray-drying operation, a flavor oil is coated or agglomerated with a solid particulate material so that the flavor oil is dispersed within the spray-dried particle. Spray-drying involves the use of large quantities of air usually at an elevated temperature of, for example, about 120-230°C (250-450°F) to provide a solid coating or flavor matrix surrounding the flavor oil. Conventional spray drying can cause changes to take place in the flavor oil and can also result in sizeable losses of volatile constituents by evaporation. The loss of flavor may adversely affect the final flavor due to the fact that loss of flavoring material may be made up largely of the very low boiling point constituents with the result that the loss of these constituents changes the flavor of the end product.

More recently, as evidenced by European patent application numbers EP 455598 and 401954, flavor oils have been microencapsulated in the form of coacervate microcapsules, which comprise a core of flavor oil and a coating layer around the core. The coating layer is prepared by coacervation which is a process for the aggregation of colloidal spheres held together by electrostatic forces. In complex coacervation, the aggregation of colloidal spheres is a mixture of two or more oppositely charged hydrophilic colloidal materials of both cationic and anionic type. For instance, the colloidal material may be selected from the group of materials such as gelatin, casein, agar-agar, gum arabic, carboxymethylcellulose and the like and mixtures thereof. Coacervation, or aggregation to uniformly distribute the colloidal materials around the flavour oil droplets, is then carried out by diluting an emulsion of the flavor oil in the presence of such colloidal materials with water, adjusting the pH of the emulsion, or temperature or combinations of such techniques.

It has also been proposed in methods of making flavoring materials to form a coacervate from gelatin and gum arabic colloidal materials for the purpose of encapsulating a garlic flavor oil as disclosed in U.S. Patent 3,647,481. According to this patent, the coacervate capsule slurry is stirred and cooled at 5°C, with stirring, for at least 2.5 hours. The slurry is then spray-dried and the capsules thus formed are filtered then mixed with a vegetable soup base. The resulting capsule-soup based mixture is then added to boiling water thereby creating a soup having a flavor with garlic seasoning.

While many improvements have been made in the art for making particulate flavoring materials, further improvements are needed. It would be advantageous to have methods for continuously encapsulating flavor oil particles with improved particle size control. It would also be advantageous to have reproducible methods for encapsulation that were adaptable to tonnage production. Further, it would be very desirable in achieving these advantages if improved yields and product quality could also be accomplished. Improved methods of flavoring foods are also desired.

French Patent Application 2570604 describes a method for encapsulation of volatile products such as aromatic essences for use in aromatherapy. The essence is dispersed in a gelatin solution, the gelatin then being coacervated by addition of an ionic solution. After removal of the surplus organic phase, the gelatin-coated granules are treated with formalin and dried.

The invention provides a method of flavouring foods as defined in claim 1.

This invention is directed to a method involving preparing aqueous liquid flavour oil capsules. Flavour oil capsules produced according to this invention may contain as much as much as 70% up to 95% of flavor oil, and are environmentally protected with a heat-stable polymeric coating. The microencapsulated flavor oil capsules are "fracturable", which means that, upon chewing, they provide uniform and sustained release of flavor oil. The aqueous liquid flavor compositions offer the advantages of flavor cost savings, easy handling, flavor containment and processes adaptable to tonnage production.

The method of this invention involves microencapsulating discrete droplets of emulsified flavor oil by coacervation in water. During coacervation, a polymeric coating over the discrete droplets is formed to produce microencapsulated flavor capsules. The polymeric coating is then cross-linked by covalent or ionic bonding with a cross-linking agent in the water, and water removed to provide about 15% to 40% flavor capsules solids.

By employing the method, flavor oils in amounts of up to 95% by weight, within the range of about 50% to 95% by weight, are encapsulated in a polymeric coating material, i.e., at a ratio of about 10:1 to about 5:1 of oil to coating. Usually about 70 to about 95% by weight oil encapsulation is achieved. The aqueous liquid compositions contain heat-stable and fracturable flavor oil capsules that may be employed in a wide variety of food applications. For instance, in a preferred form these aqueous liquid flavor capsules are provided with a cross-linked gelatin coating that protects the flavor oil in a wide variety of food applications involving cooking and food preparation. "Heat-stable" as that term is used herein means protected against the deteriorating effects of heat in microwave, baking, frying and other cooking or heating applications where temperatures are achieved over a range of about 60°C (140°) to 230°C (450°F). The heat-stable and fracturable flavor capsules are particularly suited for use in deep fat frying of food where the food product containing the spray-dried flavor capsules is simply submerged in hot oil at about 120° (250°) to about 230°C (450°F) for the required cooking time and the flavor oil is environmentally protected during cooking so that it may be fractured upon chewing the cooked food to provide a sustained and uniform flavor oil release. Microwaveable foods may be also be prepared from a dry or wet mix of ingredients incorporating the aqueous liquid flavor oil capsules for the preservation of the flavor upon microwave heating or cooking at about 60° (140°) to about 100°C (212°F) and for fracturable sustained flavor release upon chewing the prepared food. Baked foods prepared from flour-based food products having aqueous liquid flavor capsules incorporated therein may be prepared by cooking at about 75°C (170°) to about 220°C (425°F) and the advantages of the fracturable flavor oil capsules may similarly be achieved. Extruded food products made from homogeneous mixtures of ingredients may be prepared or cooked. Candies and other ingestible compositions may be prepared utilizing the aqueous liquid flavor capsules that are fracturable upon chewing to provide a high flavor burst over sustained periods.

The objectives of this invention, its advantages and features will be further understood with reference to the following detailed description and specific examples to enable one with ordinary skill in the art to practice the invention.

### Detailed Description of the Invention

A variety of flavor oils may be encapsulated by coacervation to form the aqueous liquid flavor capsules. These flavor oils include flavoring aromatic compounds and/or oils, oleoresins and extracts derived from plants, leaves, flowers, fruits and so forth, and combinations thereof. Flavor oils include cinnamon oil, oil of winter green, peppermint oil, bay oil, thyme oil, spearmint oil, cassia oil, and the like. Artificial, natural and synthetic fruit flavors such as vanilla, and citrus oils including lemon, orange, grapefruit, lime, and fruit essences including apple, pear, peach, strawberry, cherry, and so forth, may be used. These flavoring oils may be used individually or in a mixture as is well known in the art. Further examples of such flavoring oils or flavoring agents of this type may be obtained with reference to the above cited patents.

The coating layer as prepared by coacervation, comprises one or more colloidal materials which must be hydrophilic, gellable and ionizable. Colloidal materials may be selected from the group consisting of gelatin, alginates, casein, gum arabic, carboxymethylcellulose, and the like and mixtures thereof. In a most preferred form, the colloidal material in the coating layer comprises gelatin.

The method is practiced usually by first forming a solution of a first colloidal material such as gelatin in water above its gelation temperature. Separately, a second colloidal material such as sodium carboxymethylcellulose is added to water to form a clear solution. The two solutions are then mixed and the temperature is reduced whereupon the flavor oil is mixed into the resulting solution at a mixing speed to form the desired emulsion. Coacervation, or aggregation to uniformly distribute the colloidal materials around the flavoring oil droplets, is then carried out by diluting the emulsion with water, adjusting the pH and allowing an elapsed time for colloid to coat the light droplets. Then, it is necessary to cross-link the colloidal coating on the emulsified oil droplets and, in a preferred form, glutaraldehyde is used to cross-link the gelatin coating surrounding the flavor oil droplets. Alum may also be used to cross-link. The coated flavor oil capsules, as typically sized up to about 600 microns, normally in a range of about 100 to 300 microns, may be prepared for partial dewatering.

As indicated above, it is preferred to form a slurry of coated microcapsules having about 15% to about 40% by weight capsules solids to achieve the benefits of the aqueous liquid flavor capsules such as flavor cost savings, easy handling and better flavor containment because of reduced flavor volatility in the water. The aqueous liquid flavor capsules are delivered by a pump at a suitable rate per hour in processing to afford easy handling.

### Detailed Description

The following examples illustrate the practice of this invention and its preferred modes. It will be understood, however, that these examples are not intended to limit the scope of the invention.

### AQUEOUS LIQUID FLAVOR OIL MICROCAPSULES

### Example 1 - Aqueous Liquid Microcapsules of Lemon Oil and Cross-Linked Gelatin Coating

Gelatin (90 grams) and water (810 grams) were combined at 50°C and mixed until a clear solution was obtained. Sodium carboxymethylcellulose (9 grams) and 441 grams of 50°C water were separately mixed until a clear solution formed. The two solutions were then combined and chilled to 36°C. Lemon oil (720 grams) was mixed into the solution until a desired particle size of less than about 150 microns of oil droplets were formed. Thereafter, 4 liters of dilution water at 36°C were added to the batch. The resultant mixture was slowly cooled to 28°C. A 50% aqueous solution of gluteraldehyde (11.25 grams) was added to cross-link the gelatin. The slurry of microcapsules was then stirred for about eight hours and dewatered by decanting or filtering to provide capsule solids of about 15% to about 40% by weight. The flavor oil microcapsules yield was approximately 600 grams (74%) having about 85% by weight oil in the capsules.

### Example 2 - Aqueous Liquid Microcapsules of Vegetable Oil and Cross-Linked Gelatin Coating

The procedures of Example 1 were repeated except that vegetable oil was substituted for the lemon oil. After the microcapsules were formed in substantially the same manner, they were dewatered essentially the same conditions to produce the aqueous liquid microcapsules of vegetable oil having a cross-linked gelatin coating. The capsules yield was about 74% by weight having about 85% by weight oil in the capsules.

### Example 3 - Aqueous Liquid Microcapsules of Vegetable Oil Containing Garlic and Cross-Linked Gelatin Coating

The procedures of Example 2 were repeated except that about 50% by weight garlic was incorporated into the vegetable oil. After microcapsules of vegetable oil containing garlic were formed in substantially the same manner, they were dewatered under essentially the same conditions to produce the aqueous liquid microcapsules of vegetable oil containing garlic and having a cross-linked coating of gelatin. The capsules yield was about 68% by weight having about 85% by weight oil in the capsules.

### EXAMPLES OF FOOD APPLICATIONS FOR AQUEOUS LIQUID FLAVOR OIL MICROCAPSULES

### I. Deep Fat Fried Foods

Example 1 - Whole muscle meats including beef, chicken, fish and seafood are injected with the aqueous liquids containing the heat-stable and fracturable flavor capsules (15%-40% solids) of the above examples by injecting an aqueous liquid mixture containing water, salt, phosphate and about 0.25% to 1% by weight flavor capsules into the meat flesh. Thereafter, the meat is deep fried at about 160°-200°C (325°-400°F) for about 30-90 seconds. During the course of this procedure, the flavor is environmentally protected from release at the hot temperatures by the cross-linked gelatin coating, for example. The cross-linked gelatin prevents the breakdown and release of the flavor. In this instance, flavor oils such as pepper oil, onion oil, lemon oil, dill oil, mustard oil, and other oils or mixtures thereof, may be produced in microcapsules having cross-linked gelatin coatings for injection as a component of the injectable solution.
Example 2- Aqueous liquid flavor oil microcapsules (15%-40% solids) of the above examples are mixed into bread dough as a liquid in an amount of about 0.25% to 1% by weight capsules. The bread dough is then baked and may be separated into cubes. The cubes are then deep fat fried at about 190°C (375°F) for about 30 seconds. In this example, onion oil, garlic oil, orange oil, red pepper or garlic oil, or the like flavor oils, are encapsulated according to the above technique into aqueous liquid heat-stable and fracturable microcapsules.
Example 3 - Comminuted meat products consisting of approximately 90% meat and about 10% starch/flour base binder having aqueous liquid heat-stable and fracturable flavor oil microcapsules (15%-40% solids) incorporated therein at about 0.25% to 5% by weight are prepared. These products are then fried at about 170°C (350°F) for about 60-120 seconds. Flavors that may be incorporated into the flavor capsules include those identified in Example 1 above and such oils are protected from the heating environment, deep fat frying oil, and other environmental conditions so that upon chewing the capsules are fracturable to release the encapsulated flavor oil.
Example 4 - Raw dough products, for example, doughnuts and pastries, were prepared by mixing aqueous liquid flavor capsules (15%-40% solids) into ingredients consisting of approximately 51% flour, 5% sugar, 1% salt, 40% water and 0.5% yeast or 1% chemical leavening agent and fried at about 175°-200°C (350°-400°F) for about 30-120 seconds. In these examples, flavor capsules of fruit flavors such as berry oil, lemon oil, lime oil, and the like, are prepared by the aqueous flavor encapsulating process of this invention for incorporation into the dough products at levels of about 0.25% to 1% by weight.
Example 5 - Potato sticks from ground potato or potato strips are made by first forming a mash of potato ingredients containing about 1% by weight flavor capsules in aqueous liquid (15%-40% solids) for frying at about 175°C (350°F) for about 60 seconds. In this example, the flavor capsules may contain a spice or similar flavor oil identified in Example 1 above and other oils in imparting bacon, chili or pepperoni flavors to the ultimate product.
Example 6 - Corn chips, tortillas and pork rinds are made by first forming a mash of ingredients composed of the appropriate flour, salt and water containing about 1% by weight flavor capsules in aqueous liquid (15%-40% solids) for frying at about 175-200°C (350-400°F) for about 45-90 seconds. Flavor oils of the type identified in the above examples may be encapsulated into microcapsules and incorporated into the food that would then yield upon chewing the burst of the appropriate flavor(s).
Examples 7-9 - The procedures of examples 1-3 are repeated to provide a food product containing about 1% by weight flavor capsules. Then, a liquid batter consisting of approximately 50% flour and 50% water is coated onto the food product to form a coating of the batter. The coated food product was deep fat fried to provide a fried food product with a battered coating. It will be understood that the aqueous liquid flavor capsules (15%-40% solids) may be incorporated into the batter, rather than in the food product that is coated with the batter, prior to deep fat frying.
Example 10 - Whole or cut pieces of vegetables and fruit were coated with a liquid batter consisting approximately of 50% flour and 50% water containing about 1% by weight flavored capsules in aqueous liquid added as part of the water (15%-40% solids). Vegetables such as mushrooms, zucchini or broccoli may be coated with the batter containing the flavor capsules. Flavor capsules containing onion oil, garlic oil, lemon oil or the like, depending upon the desired flavor, may be employed in the batter prior to deep fat frying.
Example 11 - Pieces of cheese may be substituted for the vegetables or fruit of Example 10 and the procedure repeated in order to produce fried cheese products having a batter containing the flavor capsules.
Examples 12-15 - Potato strips or onion rings may be substituted for the vegetables or fruit in Example 10 and battered in a similar fashion with coating on the outside of the strips or onion rings to incorporate the fracturable flavor capsules containing onion, pepper, garlic, or other flavoring oils prior to deep fat frying.
Example 14 - In addition to coating any of the above food products with a batter, a breading may be subsequently coated on the outside of the battered food product. The breading may be composed of, but not limited to, dried ground bread, bread crumbs, corn flour, corn grits, corn flakes, rice crumbs, dried pasta, cracker meal, dried potato meal, and blends of such breading.
   Furthermore, aqueous liquid flavor capsules (15%-40% solids) may be sprayed onto food products like cereal, crackers or snacks and dried to remove the water at 5-15 minutes at 80°-150°C (175°-300°F) without significant flavor loss. For examples, water 25%-35% containing 10%-20% liquid flavor capsules and sugar 55%-65% where the capsules are about 1% by weight may be spray coated onto the food.
Example 15 - In addition forming a batter coating, a casing may be employed instead where, for instance, a hot dog may be encased with a dough consisting of approximately 50% flour, 6% sugar, 1% salt, 2% dry milk, 40% water and 1% yeast. The aqueous liquid flavor capsules (15-40% solids) may be incorporated into the encased food or the casing at a suitable level prior to deep fat frying in manner similar to the above examples.

The above Examples 1-15 demonstrate the incorporation of aqueous liquid heat-stable and fracturable flavor capsules that will release upon chewing the flavor oil that has been encapsulated. Furthermore, the fracturable flavor capsules are environmentally protected during deep fat frying from the temperatures on the order of about 160-200°C (325-400°F) that have been used. The flavor oil is protected by such encapsulation from deterioration or volatilization. The gelatin or polymeric coating acts as a protective barrier until the flavor is released by fracture upon chewing. In these examples, gelatin that has been cross-linked by gluteraldehyde serves as an edible polymeric coating for microencapsulating the flavor in the aqueous liquid.

### II. Microwave Foods

Example 16 - A dry mix for a cake is formulated by mixing 43% flour, 42% sugar, 5% corn syrup, 2.5% emulsifier, 2% baking powder and 1% salt. Aqueous liquid flavor oil capsules (15%-40% solids) are incorporated into the dry mix to provide the flavor in microwave cooking. The aqueous liquid flavor microcapsules are prepared as described above. For instance, fruit, orange or other flavor oils may be encapsulated in fracturable particles for liquid incorporation at a suitable level and microwave cooking. During microwave cooking of the rehydrated dry mix in the formation of a cake, the flavor is protected against loss by microwave cooking.
Example 17 - A dry mix for brownies or sweet breads is formulated by mixing 32% flour, 45% sugar, 6% shortening, 7% powdered sugar, 3% egg whites, 0.3% baking powder and 2% emulsifier. Aqueous liquid flavor capsules are incorporated into the dry mix to provide about 1% by weight flavor capsules for microwave cooking. The aqueous liquid flavor microcapsules (15%-40% solids) are prepared as described above. For instance, fruit, orange or other flavor oils may be encapsulated in fracturable particles for liquid incorporation in a dry mix and microwave cooking. During microwave cooking of the rehydrated dry mix in the formation of brownies or sweet breads, the flavor oil is protected against loss by microwave cooking.
Example 18 - A dry mix for biscuits/scones is formulated by mixing 54% flour, 24% shortening, 22% milk and 1% emulsifier. Aqueous liquid flavor capsules are incorporated into the dry mix to provide flavor oil capsules at about 1% by weight for rehydration and microwave cooking. The aqueous liquid flavor microcapsules (15%-40% solids) are prepared as described above. For instance, fruit, cinnamon or other flavor oils may be encapsulated in fracturable particles for liquid incorporation in a dry mix and microwave cooking. During microwave cooking of the rehydrated dry mix in the formation of biscuits/scones, the flavor oil is protected against loss by microwave cooking.
Example 19 - A mix for bread is formulated by mixing 51% flour, 6% sugar, 1% salt, 1% yeast and 1% emulsifier for addition to 40% water containing the aqueous liquid flavor capsules at about 1% by weight and microwave cooking. The aqueous liquid flavor microcapsules (15%-40% solids) are prepared as described above. For instance, fruit, cinnamon or other flavor oils may be encapsulated in fracturable particles for incorporation in a dry mix and microwave cooking. During microwave cooking in the formation of bread, the flavor is protected against loss by microwave cooking.
Example 20 - A dry mix for cookies or cakes is formulated by mixing 43% flour, 25% brown sugar, 20% shortening, 9% egg, 1% water, 0.3% salt, and 0.7% baking soda. Aqueous liquid flavor capsules are incorporated into the dry mix at about 1% by weight capsules for rehydration and microwave cooking. The aqueous liquid flavor microcapsules (15%-40% solids) are prepared as described above. For instance, fruit, lemon or other flavor oils may be encapsulated in fracturable particles for incorporation in a dry mix and microwave cooking. During microwave cooking in the formation of cookies or cakes, the flavor oil is protected against loss by microwave cooking.
Example 21 - A sauce may be prepared where the aqueous liquid flavor capsules (15%-40% solids) have been incorporated as prepared in accordance with the above procedures. For instance, a white sauce may be prepared containing the fracturable flavor oil microcapsules containing pepper oil, onion oil, lemon oil, dill oil, garlic oil, or the like, that then would be added as a part of a final product.
Example 22 - Any of the above whole muscle meats such as beef, chicken, fish and seafood that are flavored by injection in Example 1 above, may form the basis for a prepared meal, casserole, stew and other microwaveable dishes where the aqueous liquid flavor capsules are incorporated into the product. The food product would either be cooked or prepared for reheating in the microwave.
Example 23 - Oatmeal/farina may be combined with aqueous liquid flavor capsules for heating in the microwave and cooking for approximately two minutes in order to provide a flavored oatmeal/farina upon chewing where the flavor is environmentally protected during microwaving.

### III. Baked Foods

Example 24 - A chemically leavened or yeast leavened bread is formulated containing approximately 50% flour, 6% sugar, 1% salt, 40% water and 1% yeast or a chemical leavening agent. In this example, aqueous liquid flavor capsules (15%-40% solids) are incorporated into the dough at a suitable level. Such flavor capsules are prepared in accordance with the above examples and may be exemplified by those set forth in Example 2 above. During fermentation and subsequent baking for about 20-60 minutes at about 160-190°C (325-370°F), the flavor oil is protected against baking temperatures and the surrounding environment.
Example 25 - Cookies were formulated containing approximately 50% flour, 23% shortening, 16% sugar, 5% water, 5% egg, 0.25% salt and 0.12% soda. In this example, aqueous liquid flavor capsules (15%-40% solids) are incorporated at a suitable level into the dough. Such flavor capsules are prepared in accordance with the above examples and may be exemplified by those set forth in Example 2 above. During subsequent baking for about 10-20 minutes at about 160-190°C (325-370°F), the flavor oil is protected against baking temperatures and the surrounding environment.
Example 26 - Crackers/baked snacks were formulated containing approximately 64% flour, 24.6% water, 7.5% shortening, 2.5% sugar, and 0.6% salt. In this example, aqueous liquid flavor capsules (15%-40% solids) are incorporated into the dough at a suitable level. Such flavor capsules are prepared in accordance with the above examples and may be exemplified by those set forth in Example 2 above. During subsequent baking for about 8-15 minutes at about 200-230°C (400-450°F), the flavor oil is protected against baking temperatures and the surrounding environment.
Example 27 - Cakes were formulated containing approximately 40% flour, 2% baking powder, 1% salt, 47% sugar, and 10% shortening. In this example, aqueous liquid flavor capsules (15%-40% solids) are incorporated into the dough at a suitable level. Such flavor capsules are prepared in accordance with the above examples and may be exemplified by those set forth in Example 2 above. During fermentation and subsequent baking for about 25-35 minutes at about 175°C (350°F) the flavor oil is protected against baking temperatures and the surrounding environment.
Example 28 - Tortillas were formulated containing approximately 50% flour, 40% water, 6% sugar, 1% salt and 1% yeast. In this example, aqueous liquid flavor capsules (15%-40% solids) are incorporated into the dough at a suitable level. Such flavor capsules are prepared in accordance with the above examples and may be exemplified by those set forth in Example 2 above. During fermentation and subsequent baking for about 8-10 minutes at about 175-200°C (350-400°F), the flavor oil is protected against baking temperatures and the surrounding environment.
Example 29 - Pie shells were formulated containing approximately 56.2% flour, 25% shortening, 16% water, 1% salt, 1% dextrose, 0.2% calcium carbonate and 0.1% soda. In this example, aqueous liquid flavor capsules (15%-40% solids) are incorporated into the dough at a suitable level. Such flavor oil capsules are prepared in accordance with the above examples and may be exemplified by those set forth in Example 2 above. During fermentation and subsequent baking for about 8-12 minutes at about 160-200°C (325-400°F), the flavor oil is protected against baking temperatures and the surrounding environment.
Example 30 - Frostings were formulated containing approximately 76% powdered sugar, 6% milk, 2% cream, 10% shortening and 5% egg white. In this example, aqueous liquid flavor capsules (15%-40% solids) are incorporated into the frosting at a suitable level. Such flavor oil capsules are prepared in accordance with the above examples and may be exemplified by those set forth in Example 2 above. In this case, after mixing, no cooking is needed because it may be served as a frosting.
Example 31 - Fruit fillings were formulated containing approximately 30% fruit puree, 20-30% water, 10-35% corn syrup, 3-10% sugar and 2-6% stabilizer. In this example, aqueous liquid flavor oil capsules (15%-40% solids) are incorporated into the mixture at a suitable level. Such flavor oil capsules are prepared in accordance with the above examples and may be exemplified by those set forth in Example 2 above. During fermentation and subsequent baking for about 10-30 minutes at about 75-90°C (165°-190°F), the flavor oil is protected against baking temperatures and the surrounding environment.
Example 32 - Pressed snacks or rice cakes may be prepared where grain would be pressed or bound together through adherence of a starch solution or water spray containing a suitable amount of the aqueous liquid flavor oil capsules (15%-40% solids) prepared in accordance with the above procedures. Any of the flavors exemplified by onion, garlic, orange, pepper, lemon, mustard or other oils may be employed as the flavor oil in the microcapsules.

### IV. Extruded Food Products

Example 33 - A cereal or a snack-like product is produced by mixing about 10-95% flour, about 5-15% water, 1-90% starch, about 1% salt, about 10% sugar and 0.5% calcium carbonate. The ingredients were formed into a homogeneous mass that may be extruded into any one of a number of food forms and cooked either simultaneously during extrusion or thereafter. Aqueous liquid flavor oil capsules (15%-40% solids) produced in accordance with the preceding examples and providing any one of a number of the above stated flavors such as onion, garlic, pepper oil, lemon oil, and so forth, may be mixed together in amounts of from about 0.25% to 5% by weight capsules with the above ingredients in order to environmentally protect the flavor oil and provide a fracturable capsule whereby the burst of flavor may be achieved upon mastication.
Example 34 - The procedure according to Example 33 is repeated except that the formula for the extrudable food product is modified to provide a beef leather or jerky composition including proteins that have been cooked out, shredded, and extruded. The aqueous liquid flavor oil capsules are again incorporated into the ingredients of the mass prior to extrusion and/or cooking to achieve the fracturable flavor oil capsules in the food product and the benefits of this invention.
Example 35 - A dough consisting of about 60-80% flour, 0-10% eggs, 0-20% water and about 1% salt was prepared by mixing these ingredients with a suitable amount of aqueous liquid flavor oil particles (15%-40% solids) produced in accordance with the above examples. Upon formation into a homogeneous mass, followed by extrusion, noodles may be prepared containing the fracturable flavor oil capsules.
Example 36 - A fruit leather or similar product is prepared by combining as dry ingredients 34% high fructose corn syrup, 29% sugar, 11% water or fruit puree, 7-15% starch, 2% emulsifier, 1% citric acid and 2% vegetable oil. The aqueous liquid flavor oil capsules (15%-40% solids) are incorporated into the ingredients in a suitable amount to accentuate the fruity flavor. A fruit flavor oil may be encapsulated according to the above technique by coacervation to produce the aqueous liquid fracturable flavor oil capsules. The ingredients are formed into a homogeneous mass, extruded and cooked for about 1-3 minutes at about 95-100°C (200-212°F).
Example 37 - A licorice product was made by combining about 45.7% flour, about 7.7% starch, about 13% water, about 19% cake flour, about 8% sugar, about 2% emulsifier, about 2% oil, about 0.3% salt and about 1% citric acid. Aqueous liquid flavor oil capsules (15%-40% solids) containing flavor oils such as cherry, orange, lemon or the like were incorporated in with the other ingredients in a suitable amount and environmentally protected during extrusion and cooking for about 6-10 minutes at about 80-100°C (180°-212°F).

### V. Miscellaneous Food Products

Example 38 - A candy product was prepared by combining about 51% sugar, 45% corn syrup and with about 1-2% aqueous liquid flavor oil capsules (15%-40% solids) prepared in accordance with the above techniques containing orange oil, lemon oil, lime oil or other fruity oils, for example. After combination of the ingredients, the product is cooked in a pan at about 135-140°C (280-285°F) for about 1-5 minutes to provide a candy product.
Example 39 - A food product having the perception of fat with a low fat or fatty oil dose is made by providing aqueous liquid capsules containing vegetable oil in accordance with the above-described techniques to provide a fracturable fatty oil capsule that may be coated onto a food product or incorporated into the food product in accordance with the techniques described in Examples 1-15, for example. In these examples, a low dose of fat in such finely divided form as contained in the fracturable capsules, upon chewing, will be released imparting the perception of a high fat content when deposited on the teeth, tongue and taste buds.

This Application is related to International Patent Application WO93/19622 filed on even date herewith entitled "Heat-Stable and Fracturable Spray-Dried Free-Flowing Flavour Oil Capsules, Method of Making and Using in Foods".

## Claims

1. A method of flavouring foods comprising forming an emulsion of discrete flavour oil droplets in water, forming a polymeric coating over the discrete flavour oil droplets by coacervation to produce flavour oil capsules in the water, cross-linking the polymeric coating on the capsules in water, and dewatering the polymer coated flavour oil capsules, characterised in that the dewatering is only partial and such as to provide aqueous liquid flavour oil capsules containing 15% to 40% capsules solids, and in that the method includes incorporating the capsules into a food in an effective flavour amount, processing the capsules by subjecting them to a mechanical shearing force in incorporating them into said food, and cooking said food by heating, the capsules protecting the flavour oil in the cooked food and being fracturable upon chewing of the cooked food to provide a uniform and sustained flavour oil release.

2. A method as claimed in Claim 1, wherein the microencapsulated flavour oil capsules each have about 70-95% by weight oil.

3. A method as claimed in either Claim 1 or Claim 2, wherein the ratio of the flavour oil to the polymeric coating in the flavour oil capsules is about 10:1 to about 5:1.

4. A method as claimed in any preceding Claim, wherein the flavour oil capsules are sized up to about 600 microns.

5. A method as claimed in any preceding Claim, wherein the polymer coating comprises gelatin, or mixtures of gelatin with carboxymethylcellulose, gum arabic, or alginate.

6. A method as claimed in any preceding Claim, wherein the polymeric coating is gelatin and wherein the method includes cross-linking with glutaraldehyde or alum.

7. A method as claimed in any preceding Claim, further comprising extrusion of the food containing the flavour oil capsules.

8. A method as claimed in preceding Claim, wherein the food is candy.

9. A method as claimed in either Claim 7, or Claim 8 as appendant to Claim 7, comprising cooking the extruded food product.

10. A method as claimed in any preceding Claim, comprising injecting the liquid flavour oil capsules into the food prior to cooking.

11. A method as claimed in any preceding Claim, comprising cooking by frying the food in hot oil.

12. A method as claimed in any one of Claims 1 to 10, comprising cooking by baking.

13. A method as claimed in any one of Claims 1 to 10, comprising cooking by microwave heating.

14. A method as claimed in any preceding Claim, comprising incorporating the flavour oil capsules into the food by coating the food with the capsules.

15. A method as claimed in Claim 14, wherein the capsules are coated onto the food by spraying.

16. A method as claimed in any preceding Claim, wherein the food is meat, poultry, fish, seafood, vegetable, fruit, cheese, potato, or a flour-based food product.

17. A method as claimed in any preceding Claim, wherein the food is a flour-based food product and the method includes providing a mix of ingredients for the flour-based food product containing the aqueous liquid flavour oil capsules before microwave heating.

18. A method as claimed in any preceding Claim, wherein the food is a flour-based food product, preferably cake, brownies, bread, biscuit, cookies or pie.

19. A method as claimed in any preceding Claim, wherein the liquid flavour oil capsules contain a fat or vegetable oil, the capsules being fracturable upon chewing of the food to provide a low dose of fat or oil in the food with a high fat or oil dose perception.

## Patentansprüche

1. Verfahren zum Geschmacksverbesserung von Lebensmitteln, bei dem man eine Emulsion von diskreten Geschmacksöltropfen in Wasser herstellt, auf den diskreten Geschmacksöltropfen durch Koazervation eine polymere Beschichtung bildet, um in dem Wasser Geschmacksölkapseln herzustellen, die polymere Beschichtung auf den Kaspseln im Wasser vernetzt und die polymerbeschichteten Geschmacksölkapseln entwässert,
**dadurch gekennzeichnet,** daß
man das Entwässern nur teilweise und so durchführt, daß man wäßrige flüssige Geschmacksölkapseln erhält, die 15 bis 40 % Kapsel-Festanteile enthalten, und daß man bei dem Verfahren die Kapseln mit einer die Geschmacksverbesserung bewirkenden Menge in ein Lebensmittel einbringt, die Kapseln verarbeitet, indem man sie zum Einbringen in das Lebensmittel einer mechanischen Scherkraft aussetzt, und das Lebensmittel durch Erwärmen zubereitet, wobei die Kapseln das Geschmacksöl im zubereiteten Lebensmittel schützen und beim Kauen des zubereiteten Lebensmittels aufbrechbar sind, damit sich eine einheitliche und verzögerte Freisetzung des Geschmacksöls ergibt.

2. Verfahren nach Anspruch 1, bei dem die mikroverkapselten Geschmacksölkapseln jeweils etwa 70 bis 95 Gew.-% Öl aufweisen.

3. Verfahren nach Anspruch 1 oder 2, bei dem das Verhältnis von Geschmacksöl zu polymerer Beschichtung in den Geschmacksölkapseln etwa 10:1 bis etwa 5:1 beträgt.

4. Verfahren nach einem der vorhergehenden Ansprüche, bei dem die Geschmacksölkapseln eine Größe bis zu etwa 600 Mikron aufweisen.

5. Verfahren nach einem der vorhergehenden Ansprüche, bei dem die Polymerbeschichtung Gelatine oder Gemische von Gelatine mit Carboxymethylcellulose, Gummiarabikum oder Alginat enthält.

6. Verfahren nach einem der vorhergehenden Ansprüche, bei dem die Polymerbeschichtung Gelatine ist und das Verfahren das Vernetzen mit Glutaraldehyd oder Alaun umfaßt.

7. Verfahren nach einem der vorhergehenden Ansprüche, weiter umfassend das Extrudieren des Lebensmittels, welches die flüssigen Geschmacksölkapseln enthält.

8. Verfahren nach einem der vorhergehenden Ansprüche, bei dem das Lebensmittel Süßigkeiten sind.

9. Verfahren nach Anspruch 7 oder Anspruch 8 mit Rückbezug auf Anspruch 7, bei dem man das extrudierte Lebensmittelprodukt zubereitet.

10. Verfahren nach einem der vorhergehenden Ansprüche, bei dem man die Geschmacksölkapseln vor dem Zubereiten in das Lebensmittel einspritzt.

11. Verfahren nach einem der vorhergehenden Ansprüche, bei dem man das Lebensmittel durch Braten in heißem Öl zubereitet.

12. Verfahren nach einem der Ansprüche 1 bis 10, bei dem man durch Backen zubereitet.

13. Verfahren nach einem der Ansprüche 1 bis 10, bei dem man durch Erhitzen mit Mikrowellen zubereitet

14. Verfahren nach einem der vorhergehenden Ansprüche, bei dem man die flüssigen Geschmacksölkapseln in das Lebensmittel durch Beschichten des Lebensmittels mit den Kapseln einbringt.

15. Verfahren nach Anspruch 14, bei dem man die Kapseln auf das Lebensmittel durch Sprühen aufbeschichtet.

16. Verfahren nach einem der vorhergehenden Ansprüche, bei dem das Lebensmittel Fleisch, Geflügel, Fisch, Meeresfrüchte, Gemüse, Früchte, Käse, Kartoffeln oder ein Lebensmittelprodukt auf Mehlbasis ist.

17. Verfahren nach einem der vorhergehenden Ansprüche, bei dem das Lebensmittel ein Lebensmittelprodukt auf Mehlbasis ist und bei dem das Verfahren vor dem Erwärmen mit Mikrowellen das Bereitstellen eines Gemisches von Inhaltsstoffen für das Lebensmittelprodukt auf Mehlbasis umfaßt, welches die wäßrigen flüssigen Geschmacksölkapseln enthält.

18. Verfahren nach einem der vorhergehenden Ansprüche, bei dem das Lebensmittel ein Lebensmittelprodukt auf Mehlbasis ist, bevorzugt ein Kuchen, Kekse, Brot, Biscuits, Plätzchen oder Obstkuchen.

19. Verfahren nach einem der vorhergehenden Ansprüche, bei dem die flüssigen Geschmacksölkapseln ein Fett oder Pflanzenöl enthalten, wobei die Kapseln beim Kauen des Lebensmittels aufbrechbar sind, um eine niedrige Dosis des Fettes oder Öles in dem Lebensmittel bereitzustellen, wobei eine hohe Dosis des Fettes oder Öles wahrgenommen wird.

## Revendications

1. Procédé d'aromatisation d'aliments comprenant la formation d'une émulsion de gouttelettes séparées d'huile aromatique dans l'eau, la formation d'un enrobage polymérique sur les gouttelettes par coacervation afin de produire des capsules d'huile aromatique dans l'eau, la réticulation de la couche de polymère sur les capsules et, l'élimination de l'eau des capsules d'huile aromatique enrobée de polymère, caractérisée en ce que l'élimination de l'eau n'est que partielle de manière à obtenir des capsules d'huile liquide aromatique aqueuse contenant de 15 à 40% de capsules solides, et en ce que ce procédé comprend les étapes consistant à incorporer des capsules à un aliment en quantité suffisante pour l'aromatiser, façonner les capsules en les soumettant à une force mécanique de cisaillement en les incorporant à l'aliment et cuire cet aliment par chauffage, les capsules protégeant l'huile aromatique dans l'aliment cuit et étant sécables par mastication de cet aliment pour assurer la libération uniforme et prolongée de l'huile aromatique.

2. Procédé selon la revendication 1, dans lequel les capsules d'huile aromatique micro-encapsulées contiennent chacune environ 70 à 95% en poids d'huile.

3. Procédé selon les revendications 1 ou 2, dans lequel la proportion d'huile aromatique par rapport à l'enrobage polymérique des capsules est de 10:1 à 5:1.

4. Procédé selon l'une quelconque des revendications précédentes, dans lequel la taille des capsules d'huile aromatique est susceptible d'atteindre environ 600 microns.

5. Procédé selon l'une quelconque des revendications précédentes, dans lequel l'enrobage polymérique contient de la gélatine ou des mélanges de gélatine et de carboxyméthylcellulose, de gomme arabique ou d'alginate.

6. Procédé selon l'une quelconque des revendications précédentes, dans lequel l'enrobage polymérique est en gélatine, ce procédé incluant la réticulation avec le glutaraldéhyde ou l'alun.

7. Procédé selon l'une quelconque des revendications précédentes, comprenant de plus l'extrusion de l'aliment contenant les capsules d'huile aromatique.

8. Procédé selon l'une quelconque des revendications précédentes, dans lequel l'aliment est une confiserie.

9. Procédé selon soit la revendication 7, soit la revendication 8 lorsqu'elle dépend de la revendication 7, comprenant la cuisson du produit alimentaire extrudé.

10. Procédé selon l'une quelconque des revendications précédentes, comprenant l'injection des capsules d'huile aromatique liquide dans l'aliment avant sa cuisson.

11. Procédé selon l'une quelconque des revendications précédentes, comprenant la cuisson de l'aliment par friture dans de l'huile bouillante.

12. Procédé selon l'une quelconque des revendications 1 à 10, comprenant la cuisson par rôtissage.

13. Procédé selon l'une quelconque des revendications 1 à 10, comprenant la cuisson par micro-ondes.

14. Procédé selon l'une quelconque des revendications précédentes, comprenant l'incorporation des capsules d'huile aromatique dans l'aliment en enduisant celui-ci de capsules.

15. Procédé selon la revendication 14, dans lequel l'aliment est enduit de capsules par pulvérisation.

16. Procédé selon l'une quelconque des revendications précédentes, dans lequel l'aliment est de la viande, de la volaille, du poisson, des fruits de mer, des légumes, des fruits, du fromage, des pommes de terre ou des aliments à base de farine.

17. Procédé selon l'une quelconque des revendications précédentes, dans lequel l'aliment est un produit à base de farine, le procédé comprenant la fourniture d'un mélange d'ingrédients pour aliment à base de farine contenant des capsules d'huile liquide aqueuse aromatique avant le chauffage par micro-ondes.

18. Procédé selon l'une quelconque des revendications précédentes, dans lequel l'aliment est un produit à base de farine, de préférence un gâteau, des biscuits au chocolat et aux noisettes, du pain, un biscuit ou une tarte.

19. Procédé selon l'une quelconque des revendications précédentes, dans lequel les capsules d'huile liquide aromatique contiennent une huile végétale ou de la graisse, ces capsules étant sécables par mastication de l'aliment pour libérer une petite dose de graisse ou d'huile dans l'aliment avec une sensation élevée de graisse ou d'huile.
